# EUROPEAN PATENT SPECIFICATION

(11) **EP 1 038 936 B1**
(45) Date of publication and mention of the grant of the patent: **02.06.2004**
(21) Application number: 00302370.2
(22) Date of filing: 23.03.2000
(51) Int. Cl.: C09K 7/02, E21B 41/02

(54) **Brine fluids with improved corrosion properties**
Bohrlaugen mit verbesserten Korrosivitätseigenschaften
Saumures à propriétés anticorrosives améliorées

(30) Priority: 23.03.1999 US 125738 P; 28.02.2000 US 514825
(43) Date of publication of application: 27.09.2000
(73) Proprietor: BAKER HUGHES INCORPORATED, Houston Texas 77210-4740 (US)
(72) Inventor: Walker, Michael L., Sugar Land, Texas 77479 (US)
(74) Representative: Atkinson, Peter Birch

(56) References cited:
- EP-A- 0 153 192
- US-A- 3 634 270
- US-A- 4 499 006
- US-A- 4 836 941

## Description

### Field of the Invention

The instant invention relates to brine fluids, such as those used in recovering hydrocarbons, and more particularly relates, in one embodiment, to high density brine fluids with improved corrosion resistance.

### Background of the Invention

High density brine fluids are known to be applied in situations where control of pressure in a well is needed. Many soluble salts may be used to achieve the desired density of the aqueous solution. The more common salts used include, but are not necessarily limited to, chloride and/or bromide salts of the following cations: sodium, potassium, calcium and zinc. These salts impart density to the aqueous fluid by dissolving in the medium. A high density fluid may be understood as one of greater than about 8.4 pounds/gallon (1.0 kg/l) density, preferably from about 8.4 to about 22.5 lbs/gal. (1.0-2.7 kg/l), most preferably from about 9.0 to about 22.0 lbs/gal. (1.1-2.6 kg/l).

The density of these solutions made by dissolving these salts in water are limited by the molecular weight and the solubility of that salt. Zinc is a preferred cation. Zinc salts are desired as components of high density brines because of their relatively high molecular weight and great solubility in water.

Brines, including zinc-containing brines, have low pH in aqueous solutions inherently. The acid content of these fluids give the brines undesirable characteristics, one of the greatest of which are high corrosion losses that limit the uses and applications of these fluids.

A method and composition that would overcome some of the problems in the conventional brines would be desirable.

US-A-4 836 941 discloses a clear bring fluid comprising a solution of a zinc halide and a calcium halide. The fluid may include a corrosion inhibitor in an amount of 0 to 5000ppm. The specific Examples of US-A-4 836 941 employ an inhibitor in amounts of 0 to 502ppm. Specific inhibitors employed in the Examples include sodium thiocyanate (preferred) and proprietary inhibitors which may include an amine salt or an ammonium compound.

US-A-4 499 006 discloses corrosion inhibiting compositions which are the reaction product of (a) an amine mixxutre comprising a poly(oxypropylene) diamine and a poly(oxypropylene)triamine or alkyl propylene diamine and (b) an organic monomer acid mixture comprising a petroleum wax oxidate and a fatty acid.

### Summary of the Invention

An object of the present invention is to provide a method to raise the pH and thus raise the corrosion resistance of high density brine fluids.

Another object of the present invention is to provide high density brines having an increased pH and improved corrosion resistance through the em-ployment of readily available agents.

In carrying out these and other objects of the invention, there is provided, in one aspect of the invention, a corrsion resistant brine fluid comprising:
water;
a source of water soluble cations where the cations are selected from the group consisting of lithium, sodium, potassium, calcium, zinc, ammonium, cesium, rare earths, and mixtures thereof to form a brine with the water; and
an additive selectred from the group consisting of ammonia, an amine, a salt thereof or other compound capable of generating ammonia or an amine and mixtures thereof where the ammonia or amine is present in an amount effective to raise the pH of and increase the corrosion inhibition of the brine by absorbing acid characterized in that the additive is present in a mole ratio to water soluble cation ranging from 0.05/1 to 2.0/1.

In accordance with a further aspect of the present invention there is provided a method for increasing the corrosion resistance of a brine fluid comprising:
providing a brine comprising:
   water;
   a source of water soluble cations where the cations are selected from the group consisting of lithium, sodium, potassium, calcium, zinc, ammonium, cesium, rare earths, and mixtures thereof to form a brine with the water; and
adding an additive selected from the group consisting of ammonia, an amine, a salt thereof or other compound capable of generating ammonia or an amine and mixtures thereof, to provide an amount of ammonia or amine effective to raise the pH of and increase the corrosion inhibition of the brine by absorbing acid characterised in that the additive is present in a mole ratio to water soluble cation ranging from 0.05/1 to 2.0/1

### Detailed Description of the Invention

The addition of an amine or ammonia (or compound capable of generating amine or ammonia) to a high density brine of sufficient salt content, e.g. zinc bromide, in a controlled manner has been discovered to reduce the acidity of the zinc solution.

The invention is expected to be useful for any high density fluid having a density of greater than about 8.4 pounds/gallon (1.0 kg/l), preferably from about 8.4 to about 22.5 lbs/gal (1.0-2.7 kg/l), most preferably from about 9.0 to about 22.0 Ibs/gal (1.1-2.6 kg/l) and which has low pH, *i.e.,* which is less than neutral. The salt in the water to make the brine may be a chloride, bromide, formate or acetate salt. The salt cations may be lithium, sodium, potassium, calcium, zinc, ammonium, cesium, and rare earths. Mixtures of salts may also be employed. In one non-limiting embodiment, zinc sources are preferred, and zinc chloride and zinc bromide are particularly preferred zinc sources. Rare earths have their common definition of one or more of a group of 14 chemically related elements in row 6 of the Periodic Table ranging from lanthanum to ytterbium, inclusive.

The additive may be an amine or ammonia or mixtures thereof, or α compound which can generate amine or ammonia, where the additive is present in an amount effective to raise the pH of and increase the corrosion inhibition of a brine. Generally, the additive may be any neutralizing compound containing amine functionality, or capable of releasing a neutralizing amine compound. While not wishing to be limited to a particular mechanism or explanation of how the invention operates, the amine may be understood as one which is capable of absorbing some of the acid. As non-limiting examples, the additive may include, but is not limited to ammonia, alkyl, aryl or alkylaryl amines of the formula R¹R²R³N, where R¹, R², and R³ are independently selected from the group consisting of hydrogen, or hydrocarbon radical or substituted hydrocarbon radical, where the substituent is selected from the group consisting of oxygen, sulfur, nitrogen, halogen and mixtures thereof. It is to be understood that any non-interfering substituent may be placed on the hydrocarbon radical. Substituents such as halides are not reactive in the system and may also be included. In one embodiment, R¹, R², and R³ are independently selected from the group consisting of hydrogen, or alkyl, aryl, alkylaryl or alkyl, aryl, alkylaryl groups having hydroxyl substituents. The alkyl, aryl, or alkylaryl groups may have from 1 to 12 carbon atoms. In another non-limiting embodiment, the sum of the total carbon atoms of R¹, R², and R³, if present, is 20 or less, preferably 10 or less, and in another preferred embodiment is 6 or less. Amines which are suitable include, but are not necessarily limited to, methylamine, ethylamine, dimethylamine, trimethylamine, ethylmethylamine, ethyldimethylamine, ethylenediamine, aniline, and the like.

In a preferred embodiment, the additive should have sufficient vapor pressure to permit its incorporation into the brine by passing the additive vapor over the brine. Thus, if the carbon number of the additive, *i.e*., the molecular weight of the additive, is too high, it will not readily be present as a vapor. In another embodiment, ammonia is a preferred additive, for example in its anhydrous form. Anhydrous ammonia is economical and by passing its vapor over the brine, its addition may be controlled to prevent precipitation. Ammonia has high solubility in heavy brine; and it causes minimal reduction in brine density. Ethanolamines serve to lower pH and inhibit corrosion, but are less desirable because they cause a reduction in brine density. For example, the addition of, for example, triethanolamine to 17.0 ppg (2.04 kg/l) ZnBr₂-CaBr₂ brine yields a brine of relatively higher pH, but of lower density.

As noted, compounds capable of releasing or generating a neutralizing compound, such as ammonia, an amine, or a salt thereof, are suitable additives as well. Such compounds may be liquids or solids which release the base relatively slowly. Examples of such compounds include, but are not limited to, hydroxylamine, hydrazine, amides, azoles, piperidines, piperizines, aziridines, azides, betaines, amino acids, ureas, guanidines, tetramethylenehexamine, and salts thereof, in short any compound that can release or generate ammonia, an amine, or a salt thereof that can neutralize acid.

The difficulty of incorporating the additive in liquid form involves a high localized concentration of the additive which causes precipitates which do not readily redissolve into the brine. If the liquid is diluted sufficiently to prevent precipitation, then the brine is dilute enough to cause undesired reduction in brine density. Thus, it is preferred to incorporate the additive in vapor form or in some other form or by some other technique that would make the introduction gradual without high local concentrations, and without reducing brine density. While not wishing to be limited to any one theory, in one non-limiting embodiment, the precipitates are presumed to contain the cations, such as zinc e.g., but this is uncertain.

The additive is present in a concentration ranging from 0.05 moles additive per mole of cation (*e.g*. Zn⁺⁺) to 2.0 moles additive per mole of cation, preferably from 0.05 moles additive per mole of cation to 1.5 moles additive per mole of cation. Too much of any additive, such as ammonia, causes a precipitate, which is undesirable. As noted, a preferred method of incorporating the ammonia or amine into the brine is to pass vapor containing the additive over the brine solution. In this way, the incorporation of the additive can be done in a controlled manner. Other ways of contacting the brine with the additive which is in the vapor phase can be devised. For instance, the additive-containing vapor can be bubbled up through the brine, or the brine could be sprayed into a vessel containing the vaporized additive. In some instances, an inert gas may be part of the vapor used to contact the brine.

The greater the amount of ammonia (or amine, or salt thereof) added to the brine, the better the corrosion properties of the brine will be. However, increasing proportions of ammonia or amine tends to decrease the stability of the brine. In some instances, as the concentration of ammonia approaches 1% w/w, the solution may begin to precipitate. The degree of precipitation is directly proportional to the amount of ammonia added. This precipitation results in loss of density, which reduces its utility.

It has been additionally discovered that blending complexing agents in the brine before ammonia or amine treatment will suppress the precipitation of salts. By this mechanism increased amounts of ammonia may be added to the brine (e.g. zinc) system further reducing acidity without concomitant loss in density.

The complexing agents are substituted carboxylic acids. The substituted carboxylic acids may include diacids and triacids as well. In a preferred embodiment, the complexing agents are hydroxy carboxylic acids, and specific examples include, but are not limited to, tartaric acid, citric acid, gluconic acid, *N*-(2-hydroxyethyl)ethylenediaminetriacetic acid (HEDTA), and salts thereof. It is expected that any hydroxy acid which does not adversely affect the high density characteristics or corrosion characteristics of the brine would be suitable. More specifically, the hydroxy acid should have at least one hydroxyl group and at least one carboxylic acid group. The substituted carboxylic acid may be substituted with amine groups, keto groups, aldehyde groups, and mixtures thereof, and the like. In one embodiment, the hydroxy acid has 8 carbon atoms or less, preferably 6 carbon atoms or less.

The amount of hydroxy acid relative to the amount of ammonia, amine, or salt thereof present ranges from 1:100 to 100:1 on a molar basis.

The lower acidity achieved by the invention may result from simple acid-base neutralization, or may possibly arise from ammonia forming complexes with zinc suppressing the hydrolysis of the complexed water molecules. However, it will be understood that the invention is not limited to any particular explanation of the mechanism by which it might work.

The method and additives of this invention are useful to inhibit the corrosion of iron-based metals and alloys such as steels. The additives and methods of the present invention would also be expected to be effective in inhibiting the corrosion of low alloy steels, carbon steels, stainless steels, nickel-based alloys, and the like. The corrosion of copper alloys may also be inhibited by the compositions and methods of this invention, but there is a possibility that the nitrogen-containing materials may cause stress cracking in copper alloys.

Using the compositions and methods of this invention, corrosion rates with N-80 steel may be reduced by two orders of magnitude and more in comparison with corrosion rates in conventional zinc-based brine of the same density. It is further expected that the thermal stability of viscosifiers in zinc-brine-based brines should be enhanced significantly. Conventional viscosifiers include, for example, polysaccharides. Low pH brines reacts with the polysaccharide by acid hydrolysis of the polymer linkages, which thus reduces the viscosity and stability of the fluid.

Optionally, one or more conventional corrosion inhibitors may be used in the brines of this invention to further improve their corrosion properties. In another embodiment of the invention, the additives are used in the absence of other, added corrosion inhibitors.

The invention is further illustrated by the following Examples, which are only meant to illuminate the invention and not limit it in any way.

### Examples 1-4

Zinc and calcium bromide brine solutions of varying ammonia contents were prepared. The starting density of the solutions was 19.2 lb/gal (2.3 kg/l). These solutions were prepared by passing ammonia gas over the surface of the high density brines. The resultant solutions were tested at 350°F (177°C) for 64 hours on N-80 tubing steel, and the results are presented in Table I. Example 1 is the comparative control incorporating no ammonia. pH values were obtained in 1 to 100 distilled water diluted solutions.

**TABLE I**

| Raising pH and Corrosion Resistance using Ammonia | | | | | | | |
|---|---|---|---|---|---|---|---|
| Ex. | pH¹ | ratio [NH₃] [Zn⁺⁺] | % NH₃² | Density #/gal, after | Density kg/l, after | Corrosion Losses, lb/ft² | Corrosion Losses, kg/m² |
| 1 | 5.5 | - | none | 19.2 | 2.30 | 0.054 | 0.264 |
| 2 | 6.8 | 0.54 | 2.15 | 17.9³ | 2.14 | 0.001 | 0.005 |
| 3 | 6.7 | 0.33 | 1.34 | 19.0 | 2.28 | 0.002 | 0.010 |
| 4 | 6.2 | 0.14 | 0.55 | 19.2 | 2.30 | 0.007 | 0.034 |

| | | | | | | | |
|---|---|---|---|---|---|---|---|
| ¹The pH values of the brines were obtained in distilled water: composition is 1 ml of brine and 99 ml Dl water. | | | | | | | |
| ² Ammonia concentrations were determined by weight difference from the ammonia cylinder. | | | | | | | |
| ³ 92 grams of zinc oxide were recovered when the mixture cooled. The collected precipitate accounts for the loss of density. | | | | | | | |

Examples 2 and 3, incorporating 0.54 moles ammonia per mole of zinc ion and 0.33 moles ammonia per mole of zinc ion respectively, demonstrate increased pH at 6.8 and 6.7, respectively, over 5.5 for comparative Example 1 using no ammonia, and greatly improved corrosion resistance, having 0.001 and 0.002 lbs/ft² (0.005 and 0.010 kg/m²) respectively, over 0.054 lbs/ft² (0.264 kg/m²) for comparative Example 1.

### Examples 5-16

The addition of small amounts of hydroxy acids are shown to suppress or prevent precipitation in ammonia-treated brines in accordance with this invention. Results are shown in Table II. The complexing agents were added in the amounts shown to the brine, which was then treated with ammonia vapor.

**TABLE II**

| Increasing Ammonia Content Using Hydroxy Carboxylic Acids | | | | |
|---|---|---|---|---|
| Ex. | Ammonia concentration in brine, % w/w | Complexing agent | Complexing agent, amount | Comments |
| 5 | 2.08 | tartaric acid | 0.16% | slight precipitate in 24 hours |
| 6 | 0.99 | tartaric acid | 0.16% | no precipitate |
| 7 | 0.78 | tartaric acid | 0.16% | no precipitate |
| 8 | 1.38 | citric acid | 0.30% | no precipitate |
| 9 | 0.89 | citric acid | 0.30% | no precipitate |
| 10 | 0.78 | citric acid | 0.30% | very slight precipitate in 24 hours |
| 11 | 1.68 | sodium gluconate | 0.28% | very slight precipitate |
| 12 | 1.56 | sodium gluconate | 0.28% | no precipitate |
| 13 | 0.78 | sorbitol | 0.23% | precipitate in 24 hours |
| 14 | 1.00 | HEDTA | 0.20% | precipitate in 96 hours |
| 15 | 0.8 | none | | precipitate in 16 hours |
| 16 | 2.0 | none | | precipitate in 4 hours |

It may be seen that the hydroxy acid HEDTA was not an effective complexing agent for this system at the concentration added (Example 14). Also, sorbitol, which has six carbon atoms and six hydroxyl groups but no carboxylic acid functionality, was ineffective in Example 13 at preventing precipitation.

In the foregoing specification, the invention has been described with reference to specific embodiments thereof, and has been demonstrated as effective in providing brine fluids having increased pH and corrosion resistance with little decrease in density. However, it will be evident that various modifications and changes can be made thereto without departing from the broader scope of the invention as set forth in appended claims. Accordingly, the specification is to be regarded in an illustrative rather than a restrictive sense. For example, specific combinations of brines, specifically salts and additives, in other proportions or added in different ways, falling within the claimed parameters, but not specifically identified or tried in a particular composition to improve the brines herein, are anticipated to be within the scope of this invention.

## Claims

1. A corrosion resistant brine fluid comprising:
water;
a source of water soluble cations where the cations are selected from the group consisting of lithium, sodium, potassium, calcium, zinc, ammonium, cesium, rare earths, and mixtures thereof to form a brine with the water, and
an additive selected from the group consisting of ammonia, an amine, a salt thereof or other compound capable of generating ammonia or an amine and mixtures thereof where the ammonia or amine is present in an amount effective to raise the pH of and increase the corrosion inhibition of the brine, by absorbing acid
**characterized in that** the additive is present in a mole ratio to water soluble cation ranging from 0.05/1 to 2.0/1.

2. The corrosion resistant brine fluid of claim 1 where the density of the brine ranges from 8.4 to 22.5 pounds/gal (about 1.0 to 2.7 kg/l).

3. The corrosion resistant brine fluid of claim 1 where the source of water soluble cations is a salt selected from the group consisting of chloride, bromide, acetate, and formate salts having cations selected from the group consisting of lithium, sodium, potassium, calcium, zinc, ammonium, cesium, and mixtures thereof.

4. The corrosion resistant brine fluid of claim 1 where the source of water soluble cations is a source of water soluble zinc cations.

5. The corrosion resistant brine fluid of claim 4 where the source of water soluble zinc cations salt is selected from the group consisting of zinc chloride and zinc bromide.

6. The corrosion resistant brine fluid of claim 1 where the additive is selected from the group consisting of ammonia; alkyl or aryl amines of the formula R¹R²R³N, where R¹, R², and R³ are independently selected from the group consisting of hydrogen, or hydrocarbon radical or substituted hydrocarbon radical, where the substituent is selected from the group consisting of oxygen, sulfur, nitrogen, halogen and mixtures thereof; where the sum of the number of carbon atoms in R¹, R², and R³, if any, is 20 or less; ethylenediamine; aniline; and mixtures thereof.

7. The corrosion resistant brine fluid of claim 1 where the additive is ammonia.

8. The corrosion resistant brine fluid of claim 1 where the additive is a source capable of generating ammonia or an amine, selected from the group consisting of hydroxylamine, hydrazine, amides, azoles, piperidines, piperizines, aziridines, azides, betaines, ainino acids, ureas; guanidines, tetramethylenehexamine, salts thereof, and mixtures thereof.

9. The corrosion resistant brine fluid of claim 1 further comprising at least one additional corrosion inhibitor.

10. The corrosion resistant brine fluid of claim 1 further comprising at least one hydroxy carboxylic acid complexing agent.

11. A method for increasing the corrosion resistance of a brine fluid comprising:
providing a brine comprising:
water;
a source of water soluble cations where the cations are selected from the group consisting of lithium, sodium, potassium, calcium, zinc, ammonium, cesium, rare earths, and mixtures thereof to form a brine with the water; and
adding an additive selected from the group consisting of ammonia, an amine, a salt thereof or other a compound capable of generating aminonia or an amine and mixtures thereof, to provide an amount of ammonia or amine effective to raise the pH of and increase the corrosion inhibition of the brine, by absorbing acid.
**characterised in that** the additive is present in a mole ratio to water soluble cation ranging from from 0.05/1 to 2.0/1.

12. The method of claim 11 where in providing the brine, the density of the brine ranges from 8.4 to 22.5 pounds/gal (about 1.0 to 2.7 kg/l).

13. The method of claim 11 where in providing the brine the source of water soluble cations is a salt selected from the group consisting of chloride, bromide, acetate, and formate salts having cations selected from the group consisting of lithium, sodium, potassium, calcium, zinc, ammonium, cesium, and mixtures thereof.

14. The method of claim 11 where in providing the brine the source of water soluble cations is a source of water soluble zinc cations.

15. The method of claim 14 where in providing the brine the source of water soluble zinc cations salt is selected from the group consisting of zinc chloride and zinc bromide.

16. The method of claim 11 where in adding the additive, the additive is selected from the group consisting of ammonia, alkyl or aryl amines of the formula R¹R²R³N, where R¹, R², and R³ are independently selected from the group consisting of hydrogen, or hydrocarbon radical or substituted hydrocarbon radical, where the substituent is selected from the group consisting of oxygen, sulfur, nitrogen, halogen and mixtures thereof; where the sum of the number of carbon atoms in R¹, R², and R³, if any, is 20 or less ethylenediamine; aniline; and mixtures thereof.

17. The method of claim 11 where in adding the additive, the additive is ammonia.

18. The method of claim 11 where in adding the additive, the additive is a source capable of generating ammonia or an amine, selected from the group consisting of hydroxylamine, hydrazine, amides, azoles, piperidines, piperizines, aziridines, azides, betaines, amino acids, ureas, guanidines, tetramethylenehexamine, salts thereof, and mixtures thereof.

19. The method of claim 11 further comprising adding at least one additional corrosion inhibitor.

20. The method of claim 11 where in adding the additive, the additive is added in a controlled manner by contacting the brine with the additive in a vapor.

21. The method of claim 11 further comprising adding at least one hydroxy carboxylic acid complexing agent.

## Patentansprüche

1. Korrosionsbeständige Sole, aufweisend:
Wasser;
eine Quelle für wasserlösliche Kationen, wobei die Kationen ausgewählt sind aus der Gruppe, bestehend aus: Lithium, Natrium, Kalium, Calcium, Zink, Ammonium, Cäsium, Seltenerdmetallen und Mischungen davon, um eine Sole mit dem Wasser zu bilden; und
Additiv, das ausgewählt ist aus der Gruppe, bestehend aus Ammoniak, einem Amin, einem Salz davon oder einer anderen Verbindung, die in der Lage ist Ammoniak zu erzeugen, oder ein Amin sowie Mischungen davon, wobei das Ammoniak oder das Amin in einer wirksamen Menge vorliegen, um den pH-Wert und die Korrosionsinhibition der Sole zu erhöhen, indem Säure absorbiert wird, **dadurch gekennzeichnet, dass** das Additiv in einem Molverhältnis zu wasserlöslichem Kation im Bereich von 0,05:1 bis 2,0:1 vorliegt.

2. Korrosionsbeständige Sole nach Anspruch 1, worin die Dichte der Sole im Bereich von etwa 1,0 bis 2,7 kg/1 (8,4 bis 22,5 pounds/gal) liegt.

3. Korrosionsbeständige Sole nach Anspruch 1, wobei die Quelle für wasserlösliche Kationen ein Salz ist, ausgewählt aus der Gruppe, bestehend aus Chlorid-, Bromid-, Acetat- und Formiatsalzen, die über Kationen verfügen, die ausgewählt sind aus der Gruppe, bestehend aus Lithium, Natrium, Kalium, Calcium, Zink, Ammonium, Cäsium und Mischungen davon.

4. Korrosionsbeständige Sole nach Anspruch 1, wobei die Quelle für wasserlösliche Kationen eine Quelle für wasserlösliche Zink-Kationen ist.

5. Korrosionsbeständige Sole nach Anspruch 4, wobei das Salz für die Quelle der wasserlöslichen Zink-Kationen ausgewählt ist aus der Gruppe, bestehend aus Zinkchlorid und Zinkbromid.

6. Korrosionsbeständige Sole nach Anspruch 1, wobei das Additiv ausgewählt ist aus der Gruppe, bestehend aus Ammoniak, Alkyl- oder Arylaminen der Formel R¹R²R³N, worin R¹, R² und R³ unabhängig ausgewählt sind aus der Gruppe, bestehend aus Wasserstoff oder einem Kohlenwasserstoff-Rest oder substituierten Kohlenwasserstoff-Rest, worin der Substituent ausgewählt ist aus der Gruppe, bestehend aus Sauerstoff, Schwefel, Stickstoff, Halogen und Mischungen davon; wobei die Summe der Zahl der Kohlenstoffatome in R¹, R² und R³ sofern vorhanden, 20 oder weniger beträgt; Ethylendiamin; Anilin und Mischungen davon.

7. Korrosionsbeständige Sole nach Anspruch 1, worin das Additiv Ammoniak ist.

8. Korrosionsbeständige Sole nach Anspruch 1, worin das Additiv eine Quelle ist, die Ammoniak oder ein Amin erzeugen kann, ausgewählt aus der Gruppe, bestehend aus Hydroxylamin, Hydrazin, Amiden, Azolen, Piperidinen, Piperizinen, Aziridinen, Aziden, Betainen, Aminosäuren, Carbamiden, Guanidinen, Tetramethylenhexamin, Salzen davon und Mischungen davon.

9. Korrosionsbeständige Sole nach Anspruch 1, ferner aufweisend mindestens einen zusätzlichen Korrosionsinhibitor.

10. Korrosionsbeständige Sole nach Anspruch 1, ferner aufweisend mindestens eine Hydroxycarbonsäure als Komplexierungsmittel.

11. Verfahren zum Erhöhen der Korrosionsbeständigkeit einer Sole, umfassend:
Bereitstellen einer Sole, aufweisend:
Wasser;
eine Quelle für wasserlösliche Kationen, wobei die Kationen ausgewählt sind aus der Gruppe, bestehend aus: Lithium, Natrium, Kalium, Calcium, Zink, Ammonium, Cäsium, Seltenerdmetallen und Mischungen davon, um eine Sole mit dem Wasser zu bilden; und
Additiv, das ausgewählt ist aus der Gruppe, bestehend aus Ammoniak, einem Amin, einem Salz davon oder einer anderen Verbindung, die in der Lage ist Ammoniak zu erzeugen, oder ein Amin sowie Mischungen davon, wobei das Ammoniak oder das Amin in einer wirksamen Menge vorliegen, um den pH-Wert und die Korrosionsinhibition der Sole zu erhöhen, indem Säure absorbiert wird, **dadurch gekennzeichnet, dass** das Additiv in einem Molverhältnis zu wasserlöslichem Kation im Bereich von 0,05:1 bis 2,0:1 vorliegt.

12. Verfahren nach Anspruch 11, bei welchem die Dichte der bereitgestellten Sole im Bereich von etwa 1,0 bis 2,7 kg/1 (8,4 bis 22,5 pounds/gal) liegt.

13. Verfahren nach Anspruch 11, bei welchem die Quelle für wasserlösliche Kationen der bereitgestellten Sole ein Salz ist, ausgewählt aus der Gruppe, bestehend aus Chlorid-, Bromid-, Acetat- und Formiatsalzen, die über Kationen verfügen, die ausgewählt sind aus der Gruppe, bestehend aus Lithium, Natrium, Kalium, Calcium, Zink, Ammonium, Cäsium und Mischungen davon.

14. Verfahren nach Anspruch 11, bei welchem die Quelle für wasserlösliche Kationen der bereitgestellten Sole eine Quelle für wasserlösliche Zink-Kationen ist.

15. Verfahren nach Anspruch 14, bei welchem die Quelle für das Salze der wasserlöslichen Zink-Kationen der bereitgestellten Sole ausgewählt ist aus der Gruppe, bestehend aus Zinkchlorid und Zinkbromid.

16. Verfahren nach Anspruch 11, bei welchem beim Zusetzen des Additivs das Additiv ausgewählt ist aus der Gruppe, bestehend aus Ammoniak, Alkyl- oder Arylaminen der Formel R¹R²R³N, worin R¹, R² und R³ unabhängig ausgewählt sind aus der Gruppe, bestehend aus Wasserstoff oder einem Kohlenwasserstoff-Rest oder substituierten Kohlenwasserstoff-Rest, worin der Substituent ausgewählt ist aus der Gruppe, bestehend aus Sauerstoff, Schwefel, Stickstoff, Halogen und Mischungen davon; wobei die Summe der Zahl der Kohlenstoffatome in R¹, R² und R³ sofern vorhanden, 20 oder weniger beträgt; Ethylendiamin; Anilin und Mischungen davon.

17. Verfahren nach Anspruch 11, bei welchem beim Zusetzen des Additivs das Additiv Ammoniak ist.

18. Verfahren nach Anspruch 11, bei welchem beim Zusetzen des Additivs das Additiv eine Quelle ist, die in der Lage ist, Ammoniak oder ein Amin zu erzeugen, ausgewählt aus der Gruppe, bestehend aus Hydroxylamin, Hydrazin, Amiden, Azolen, Piperidinen, Piperizinen, Aziridinen, Aziden, Betainen, Aminosäuren, Carbamiden, Guanidinen, Tetramethylenhexamin, Salzen davon und Mischungen davon.

19. Verfahren nach Anspruch 11, ferner umfassend das Zusetzen mindestens einen zusätzlichen Korrosionsinhibitor.

20. Verfahren nach Anspruch 11, bei welchem beim Zusetzen des Additivs das Additiv in kontrollierter Weise zugesetzt wird, indem die Sole mit dem Additiv in einem Dampf kontaktiert wird.

21. Verfahren nach Anspruch 11, ferner umfassend das Zusetzen mindestens einer Hydroxycarbonsäure als Komplexierungsmittel.

## Revendications

1. Saumure résistant à la corrosion comprenant:
de l'eau;
une source de cations solubles dans l'eau où les cations sont choisis dans le groupe constitué de lithium, de sodium, de potassium, de calcium, de zinc, d'ammonium, de césium, de terres rares et de mélanges de ceux-ci pour former une saumure avec l'eau; et
un additif choisi dans le groupe constitué d'ammoniaque, d'une amine, d'un sel de celle-ci ou d'un autre composé capable de générer de l'ammoniaque ou une amine et des mélanges de celles-ci où l'ammoniaque ou l'amine est présente dans une quantité efficace pour élever le pH de et augmenter l'inhibition de la corrosion de la saumure par une absorption d'acide,
**caractérisée en ce que** l'additif est présent en un rapport molaire sur le cation soluble dans l'eau variant de 0,05/1 à 2,0/1.

2. Saumure résistant à la corrosion suivant la revendication 1, dans laquelle la densité de la saumure varie de 8,4 à 22,5 livres/gal (d'environ 1,0 à 2,7 kg/1).

3. Saumure résistant à la corrosion suivant la revendication 1, dans laquelle la source de cations solubles dans l'eau est un sel choisi dans le groupe constitué de sels de chlorure, de bromure, d'acétate et de formiate possédant des cations choisis dans le groupe constitué de lithium, de sodium, de potassium, de calcium, de zinc, d'ammonium, de césium et de mélanges de ceux-ci.

4. Saumure résistant à la corrosion suivant la revendication 1, dans laquelle la source de cations solubles dans l'eau est une source de cations de zinc solubles dans l'eau.

5. Saumure résistant à la corrosion suivant la revendication 4, dans laquelle la source de sel de cations de zinc solubles dans l'eau est choisie dans le groupe constitué de chlorure de zinc et de bromure de zinc.

6. Saumure résistant à la corrosion suivant la revendication 1, dans laquelle l'additif est choisi dans le groupe constitué d'ammoniaque; d'amines d'alkyle ou d'aryle de la formule R¹R²R³N, dans laquelle R¹, R² et R³ sont indépendamment choisis dans le groupe constitué d'hydrogène ou d'un radical hydrocarbure ou d'un radical hydrocarbure substitué, où le substituant est choisi dans le groupe constitué d'oxygène, de soufre, d'azote, d'un halogène et de mélanges de ceux-ci; où la somme du nombre d'atomes de carbone dans R¹, R² et R³, s'ils existent, est inférieure ou égale à 20; d'éthylènediamine; d'aniline; et de mélanges de celles-ci.

7. Saumure résistant à la corrosion suivant la revendication 1, dans laquelle l'additif est l'ammoniaque.

8. Saumure résistant à la corrosion suivant la revendication 1, dans laquelle l'additif est une source capable de générer de l'ammoniaque ou une amine, choisie dans le groupe constitué d'hydroxylamine, d'hydrazine, d'amides, d'azoles, de pipéridines, de pipérizines, d'aziridines, d'azides, de bétaïnes, d'acides aminés, d'urées, de guanidines, de tétraméthylènehexamine, de sels de ceux-ci et de mélanges de ceux-ci.

9. Saumure résistant à la corrosion suivant la revendication 1, comprenant en outre au moins un inhibiteur de corrosion supplémentaire.

10. Saumure résistant à la corrosion suivant la revendication 1, comprenant en outre au moins un agent complexant un acide hydroxycarboxylique.

11. Procédé pour augmenter la résistance à la corrosion d'une saumure, comprenant:
la fourniture d'une saumure comprenant:
de l'eau;
une source de cations solubles dans l'eau où les cations sont choisis dans le groupe constitué de lithium, de sodium, de potassium, de calcium, de zinc, d'ammonium, de césium, de terres rares et de mélanges de ceux-ci pour former une saumure avec l'eau; et
l'ajout d'un additif choisi dans le groupe constitué d'ammoniaque, d'une amine, d'un sel de celle-ci ou d'un autre composé capable de générer de l'ammoniaque ou une amine et des mélanges de celles-ci pour donner une quantité d'ammoniaque ou d'amine efficace pour élever le pH de et augmenter l'inhibition de la corrosion de la saumure par une absorption d'acide,
**caractérisé en ce que** l'additif est présent en un rapport molaire sur le cation soluble dans l'eau variant de 0,05/1 à 2,0/1.

12. Procédé suivant la revendication 11, dans lequel, dans la fourniture de la saumure, la densité de la saumure varie de 8,4 à 22,5 livres/gal (d'environ 1,0 à 2,7 kg/1).

13. Procédé suivant la revendication 11, dans lequel, dans la fourniture de la saumure, la source de cations solubles dans l'eau est un sel choisi dans le groupe constitué de sels de chlorure, de bromure, d'acétate et de formiate possédant des cations choisis dans le groupe constitué de lithium, de sodium, de potassium, de calcium, de zinc, d'ammonium, de césium et de mélanges de ceux-ci.

14. Procédé suivant la revendication 11, dans lequel, dans la fourniture de la saumure, la source de cations solubles dans l'eau est une source de cations de zinc solubles dans l'eau.

15. Procédé suivant la revendication 14, dans lequel, dans la fourniture de la saumure, la source de sel de cations de zinc solubles dans l'eau est choisie dans le groupe constitué de chlorure de zinc et de bromure de zinc.

16. Procédé suivant la revendication 11, dans lequel, dans l'ajout de l'additif, l'additif est choisi dans le groupe constitué d'ammoniaque; d'amines d'alkyle ou d'aryle de la formule R¹R²R³N, dans laquelle R¹, R² et R³ sont indépendamment choisis dans le groupe constitué d'hydrogène ou d'un radical hydrocarbure ou d'un radical hydrocarbure substitué, où le substituant est choisi dans le groupe constitué d'oxygène, de soufre, d'azote, d'un halogène et de mélanges de ceux-ci; où la somme du nombre d'atomes de carbone dans R¹, R² et R³, s'ils existent, est inférieure ou égale à 20; d'éthylènediamine; d'aniline; et de mélanges de celles-ci.

17. Procédé suivant la revendication 11, dans lequel, dans l'ajout de l'additif, l'additif est l'ammoniaque.

18. Procédé suivant la revendication 11, dans lequel, dans l'ajout de l'additif, l'additif est une source capable de générer de l'ammoniaque ou une amine, choisie dans le groupe constitué d'hydroxylamine, d'hydrazine, d'amides, d'azoles, de pipéridines, de pipérizines, d'aziridines, d'azides, de bétaïnes, d'acides aminés, d'urées, de guanidines, de tétraméthylènehexamine, de sels de ceux-ci et de mélanges de ceux-ci.

19. Procédé suivant la revendication 11, comprenant en outre l'ajout d'au moins un inhibiteur de corrosion supplémentaire.

20. Procédé suivant la revendication 11, dans lequel, dans l'ajout de l'additif, l'additif est ajouté d'une manière régulée par une mise en contact de la saumure avec l'additif dans une vapeur.

21. Procédé suivant la revendication 11, comprenant en outre l'ajout d'au moins un agent complexant un acide hydroxycarboxylique.
